# EUROPEAN PATENT APPLICATION

(11) **EP 2 485 458 A1**
(43) Date of publication of application: **08.08.2012**
(21) Application number: 11153512.6
(22) Date of filing: 07.02.2011
(51) Int. Cl.: H04L 29/08

(54) **Operating a track-bound vehicle, in particular rail vehicle**

(71) Applicant: Bombardier Transportation GmbH, 10785 Berlin (DE)
(72) Inventor: Hauspie, Patrick, 8972, Roesbrugge (BE); Hilde, Laurent, 59130, Orchies (FR)
(74) Representative: Brunotte, Joachim Wilhelm Eberhard

(57) **Abstract**

The invention relates to a track-bound vehicle, in particular a rail vehicle, having at least one passenger compartment, wherein:
- the vehicle comprises a data distribution system (23, 27-34) comprising at least one output device (27-34) which is adapted to output the data and/or content of the data, which is distributed by the data distribution system (23, 27-34), to passengers within the compartment,
- the vehicle comprises a passenger occupancy determining device (CC) which is adapted to determine the occupancy of passengers (C1, C2, C3) and/or comprises an interface for receiving information about the passenger occupancy,
- the data distribution system (23, 27-34) comprises a control device for controlling the at least one output device (27-34),
- the control device (25) is connected to the passenger occupancy determining device (CC) and/or to the interface (22) for receiving the passenger occupancy information and
- the control device (25) is adapted to control the output device (27-34) depending on the passenger occupancy or on the equivalent information.

## Description

The invention relates to a track-bound vehicle, in particular a rail vehicle, having at least one passenger compartment. Furthermore, the invention relates to a method of operating such a vehicle.

A passenger compartment is understood to be a space in which passengers may travel within the vehicle, for example while sitting or standing. The compartment may be, for example, a classical compartment having six or eight seats, or may be a compartment having more seats, such as in modern saloon coaches. In case of a double-deck coach the upper deck and the lower deck may form separate compartments, for example. Regardless of the type of coach, the compartment may be divided in sub-compartments. It is also possible that the compartment may correspond to a complete coach of the vehicle. The vehicle may be a train having a plurality of coaches which are coupled to each other.

Public transport systems offer an increasing amount of travel information and other information to passengers. The travel information may be real-time information related to the travel, e.g. information about travel duration, arrival times at stations, delays and changing opportunities. However, also publicity information, in particular advertisements, and/or entertainment information are output to passengers (in this specification in short "publicity information" or "advertisement information" or "information"). For example, EP 1717992 A1 discloses a passenger information system for a vehicle, in particular a rail vehicle, comprising a central information control arrangement, at least a first video output device and at least a first audio output device. The central information control arrangement provides first video information to the first video output device and first audio information to the first audio output device. The central information control arrangement synchronizes the first video information and the first audio information to provide a passenger of the vehicle with coherent audiovisual information.

Companies that intend to place advertisements are interested to achieve the attention of as many passengers as possible. Therefore, outputting advertisements during rush hour is preferred. On the other hand, the operator of the vehicle or vehicles is interested to charge the highest possible amount of money for outputting the advertisements to the passengers. In particular, the operator can charge more during rush hour while many passengers travel within the vehicles. Therefore, the operator may sell time-slots during rush hour or during other times while less passengers travel at a fixed rate. As a result, advertisements are output to passengers at pre-determined times corresponding to the time-slots sold to the companies.

However, the pre-determined schedule of outputting advertisements may fail with respect to the actual number of passengers travelling. For example, a specific route of public transport may be subject to diversion or interruption, so that less passengers than expected travel on the vehicle or vehicles of the route. In addition, a vehicle or part of a vehicle having a pre-determined schedule may be taken out of service and may be replaced by another vehicle which is not prepared to output the advertisements or other kind of information.

It is an object of the present invention to provide a track-bound vehicle, in particular a rail vehicle, which increases the reliability that information is actually output to the highest possible number of passengers or is output to the expected number of passengers.

It is a basic idea of the present invention to use information about the passenger occupancy (e.g. number of passengers) in at least one compartment of the vehicle to control the operation of data distribution systems comprising output devices which are associated with the respective compartment and/or which are connected to the compartment. The control is automatically performed and is preferably performed in such a manner that the output of information to passengers corresponds to and/or depends on the passenger occupancy. In particular, the output of information to passengers may be changed if the passenger occupancy changes.

On the other hand, travel information should be provided independent of the passenger occupancy during the trip.

For the output of visual information to passengers, displays which are fixed to the vehicle can be used, such as built-in screens which are integrated in the backrest of passenger seats for viewing by passengers behind the backrest. On the other hand, individual portable personal devices can be used for the output.

Not only visual information but also audio information or any other type of information (e.g. haptic information, such as vibrations) can be output by devices fixed to the vehicle and/or by portable devices, e.g. devices which are assigned to a single person or a small group of persons. Examples of portable devices are portable telephones, PDAs (Personal Digital Assistants), notebook computers, tablet PCs (Personal Computers), portable music players.

In this specification, the term "data" is understood as an expression for any type of information, in particular for informing passengers about news and/or facts, for presenting advertisements to passengers and/or for entertaining passengers. The transferred data themselves and/or their content can be output to passengers. The formulation "output of information" and the formulation "output of data and/or of content of the data" are used as synonyms.

Advertising and marketing and/or entertainment information (in this specification in short "publicity information" or "advertisement" or "information") does not directly relate to the travel of the passenger or to the traffic situation ("travel information"). Publicity information is general information to passengers in vehicles, which is typically transferred to vehicles in advance of the journey or from time to time, but not in reaction to an event related to the travel. Publicity information can be combined with control parameters (e.g., destination of the vehicle, direction of travel, position of the vehicle, date and time), wherein the control parameters are used to control the output of the publicity information. The control parameters can be transferred together with the publicity information to the vehicle and/or can be transferred separately from the publicity information to the vehicle. It is also possible to generate control parameters within the vehicle. These and other control parameters can be used to control the output of the information to passengers in addition to the passenger number.

In particular, a condition for the output of information to passengers is defined by a control parameter which is accessible by the data distribution system, wherein the at least one control parameter is assigned to respective information to be output and wherein the output of the information to be output is controlled depending on the condition defined by the at least one control parameter, so that the information to be output is only output if the condition is fulfilled.

US 5,485,347 describes for a train having a plurality of cars to automatically count a number of persons entering and a number of persons exiting each of a plurality of enclosed areas of the train. However, this information is only used to inform passengers waiting for the train at the next train station about the occupational status of the train. Such a system for automatically determining the number of persons or passengers within the enclosed areas, i.e. within the compartments, can be used to obtain and/or to determine the passenger occupancy for the purposes according to the present invention.

According to an embodiment of the invention, the determined number is transferred to the device/system for outputting information to passengers and - therefore - automatically (which means without interaction of the vehicle staff or vehicle operator staff) triggers the way how information to passengers is output. This includes the case that no information or less information is output, for example if the passenger number is smaller than a predetermined threshold.

The output of information depending on the passenger occupancy and as an additional option, storing the passenger occupancy while the information is or has been output, increases the reliability and fairness of the relation between the operator of the vehicle and the originator or customer who is interested in the distribution of the information.

For example, billing for the output of advertisements can be based on the number of passengers who actually had the opportunity to observe the information, i.e. the passengers who where in the compartment while the information was output.

In particular, the information to be output is pre-fabricated and the operator of the vehicle may guarantee that the information is output to a number of passengers exceeding a threshold value. The operator may output the information while the required number of passengers is present at the same time, or might repeat the output of the information so that the numbers of passengers add to the required threshold. However, it is also possible that the operator is obliged to output the information only if the number of passengers travelling in a compartment or in a vehicle at the same time exceeds the threshold. On the other hand it is also possible that the operator is obliged to output the information only while the passenger number is smaller than a threshold (the threshold may be a second threshold or the only threshold), since not all passengers in a fully occupied vehicle can take notice of output information.

The kind of information concerning the content and concerning the technical type can be different. In particular, the information may have the character of entertainment and/or advertisement for influencing the behaviour of the passengers. The information may be output so that the passengers can view, hear, feel and/or smell the information. In practice, video and audio information will be the most likely type of information. Displays and speakers are widely used in vehicles for public transport.

In particular, the information to be output may be pre-fabricated and is automatically output under control of a control device of a data distribution system. The control device may be a micro-controller or computer which evaluates information about the passenger occupancy and decides if this information about the passenger occupancy should result in the output of the information. In particular, there may be different pre-fabricated information (such as different advertisements) and the control device may select the information by using the passenger occupancy. For example, some advertisements may suit best to situations while the vehicle is fully occupied and other information may suit best if there are only some passengers within the compartment or vehicle.

The data distribution system may be a passenger information and entertainment system as principally known in the field of rail vehicles, for example as disclosed by EP 1717992 A1 (see above). However, in view of the control device the system is modified in a manner so that the output of information may depend on the passenger occupancy.

In addition to the information (e.g. advertisement, entertainment) which is output dependent on the passenger occupancy (e.g. passenger number) travel information can be distributed to the output device(s) independent of the occupancy.

The data distribution system may have an interface to receive or exchange information with vehicle-external systems and/or with portable personal devices of passengers, for example based on generally accepted standards, e.g., Ethernet, TCP/IP (Transfer Control Protocol/Internet Protocol) and XML (Extended Markup Language).

In addition or alternatively to the actual passenger occupancy within the vehicle or compartment, statistical information about the expected passenger occupancy can be used. For example, numbers of passengers travelling on the same route at specific days during the week and/or at a specific season in the year may form a reliable basis for predicting the passenger number. In addition or alternatively, the expected passenger number may be received from a central passenger ticket booking system of the vehicle operator. A further possibility is to calculate an estimate of the passenger occupancy, e.g. by measuring the load of the vehicle. Still another type of input information for controlling the output of information to passengers is information input by the vehicle staff, in particular the driver or a conductor. He or she may input the level of passenger occupation, for example "half the vehicle or compartment will be / is occupied". The different types of information can be combined.

In particular, the following is proposed: a track-bound vehicle, in particular a rail vehicle, having at least one passenger compartment, wherein:
- the vehicle comprises a data distribution system comprising at least one output device which is adapted to output the data and/or content of the data, which is distributed by the data distribution system, to passengers within the compartment,
- the vehicle comprises at least one passenger occupancy determining device which is adapted to determine the passenger occupancy (e.g. the number of passengers, in particular the number in the compartment) and/or comprises an interface for receiving information about the passenger occupancy (e.g. the passenger number, in particular the number in the compartment),
- the data distribution system comprises at least one control device for controlling the at least one output device,
- the control device is connected to the passenger occupancy determining device and/or to the interface for receiving the passenger occupancy information and
- the control device is adapted to control the output device depending on the passenger occupancy information.

Furthermore, a method of operating a track-bound vehicle is proposed, in particular a rail vehicle, having at least one passenger compartment, wherein:
- information from a data distribution system is output to passengers within the compartment,
- the passenger occupancy in the compartment is automatically determined and/or information about the passenger occupancy of the compartment is received by the data distribution system via an interface,
- the output of the information to passengers within the compartment (C1, C2, C3) is automatically controlled depending on the passenger occupancy.

The passenger occupancy can be determined by measuring a passenger number which can be the actual passenger number, a predicted passenger number, a combination of the numbers or information which is determined using one or more than one of these numbers (e.g. a fraction of the maximum passenger capacity which is occupied by passengers.

In particular, the following information may be used to determine the passenger occupancy of a compartment:
- the actual passenger number counted by an on-board passenger number determining device, which is preferably counted for each compartment separately, so that the control of the output device can be based on the counted number of passengers within the compartment. In particular, each door of the compartment may be combined with a sensor or a group of sensors counting the passengers leaving or entering the compartment. In addition or alternatively, images of the compartment may be taken and evaluated by automatic image analysis in order to determine the passenger number;
- the load, in particular the weight, of the vehicle and/or of a part of the vehicle, such as a coach. The load may be used to determine an estimate of the passenger occupancy;
- statistical information about passenger occupancy. This statistical information may be output by the on-board passenger occupancy determining device and may take into account passenger numbers counted and/or received in the past;
- information from a vehicle-external booking and/or reservation system, such as a system operated by the owner of a fleet of vehicles; and/or
- information about the actual passenger occupancy. This information can be received, as mentioned, from the passenger occupancy determining device on-board the vehicle.

Preferably, the control of the output device is performed depending on the result of an evaluation of the passenger occupancy. In particular, it is evaluated if the passenger occupancy fulfils at least one predetermined condition. The condition may be, for example, that the passenger number is within a range of passenger numbers, e.g. 100 - 150, exceeds a threshold value or is smaller than a threshold value. There may be a predefined operation of the data distribution system concerning the output of information and the operation is automatically performed if the condition is fulfilled.

The control device may transmit a message (including a specification of the output information) to a vehicle-internal and/or to a vehicle-external system (such as a billing system) that certain information was or is output to the passengers. In addition the corresponding passenger occupancy can be transmitted and recorded together with the specification of the information.

In particular, the vehicle may comprise a plurality of passenger compartments, wherein:
- the data distribution system comprises at least one output device for each passenger compartment which is adapted to output information to passengers within the compartment,
- the passenger occupancy determining device is adapted to determine the passenger occupancy separately for at least some of the compartments and/or comprises an interface for receiving information about the passenger occupancy for at least some of the compartments,
- the data distribution system comprises a control device or a plurality of control devices for controlling the output devices,
- each control device is connected to the passenger occupancy determining device and/or to the interface for receiving the passenger occupancy within the compartments or for receiving an equivalent information and
- each control device is adapted to control at least one of the output devices depending on the passenger occupancy in the compartment for which the output device is adapted to output information or depending on the occupancy information.

In particular, the rail vehicle may comprise a plurality of passenger compartments, wherein the data distribution system outputs information to passengers in at least two compartments depending on the passenger occupancy in the respective compartment where the information is to be output.

However, it is also possible to determine the passenger occupancy for only one or some of the compartments and to assume that this passenger occupancy is characteristic for all compartments or for the other compartments.

The passenger occupancy determining device may be an interconnected system for determining the passenger occupancy for a plurality of passenger compartments. Alternatively or in addition, the passenger occupancy determining device may comprise separate, independent means, each means being adapted to determine the passenger occupancy for one passenger compartment. In any case, the transmission of information about the passenger occupancy can be performed via a data transfer system of the vehicle, for example a system according to the Ethernet standard. This data transfer system may be the data distribution system which is used to distribute the information to be output to passengers, but may also be a separate system.

Preferably, information about the passenger occupancy is updated at regular intervals during the operation of the vehicle, for example each time when the vehicle has stopped and at least one door of the vehicle has been opened and closed. This updated occupancy information is then transferred to the control device of the data distribution system.

Examples of the present invention will be described with reference to the attached figures. The figures show:
- Fig. 1: schematically a train having three coaches, wherein the number of passengers travelling in the coaches differs,
- Fig. 2: schematically a structure of a data distribution system for outputting information to passengers in at least one compartment,
- Fig. 3: a data distribution system which is distributed over three compartments,
- Fig. 4: a flow chart illustrating a way of performing the method of the present invention and
- Fig. 5: schematically a vehicle on-board passenger information and entertainment system (PIES) as well as components on the wayside which are connected or can be connected with the PIES.

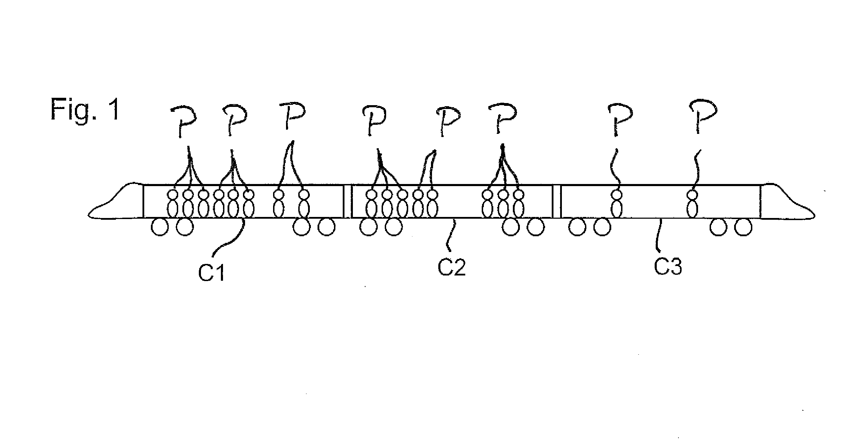

The train shown in Fig. 1 comprises three coaches C1, C2, C3. Several passengers P are travelling in coaches C1, C2, C3. However, there are only two passengers P travelling in coach C3. A passenger number determining device (not shown in Fig. 1) determines the passenger numbers in the coaches C1, C2, C3. Since there are only two passengers P in coach C3, the output of information to passengers in coach C3 is reduced or no such information is output. However, it would also be possible to output information which is particularly useful for passengers in a nearly empty coach.

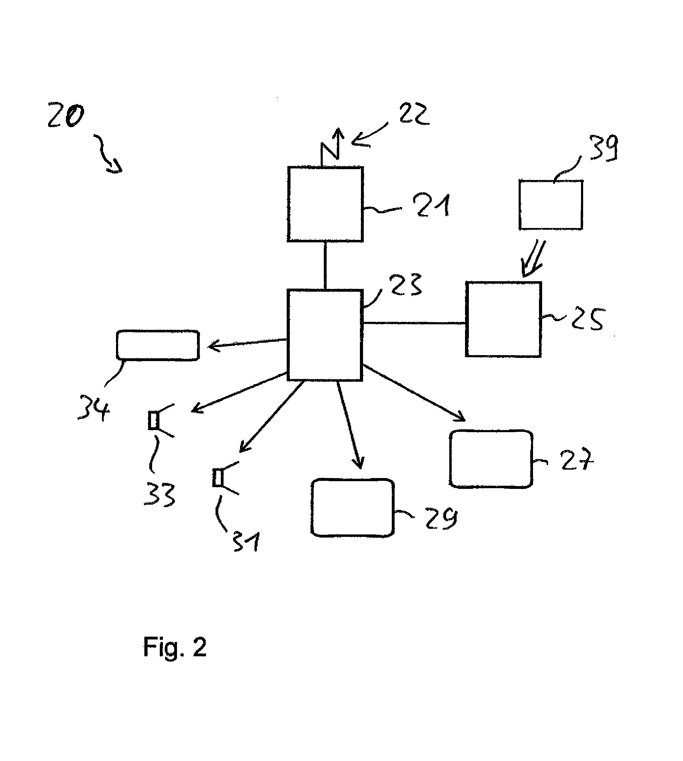

Fig. 2 shows a data distribution system having a central unit 23 for distributing information to output units 27, 29, 31, 33, 34. For example, units 27, 29 and 34 are displays of different size and/or format to output visual information. Units 31 and 33 may be speakers or sets of speakers for outputting audio information. The information to be output may be stored in the central unit 23 or in a further peripheral device (not shown in Fig. 2). In addition or alternatively, the information to be output may be received from a source external to the vehicle. The central unit 23 is connected to a communication device 21 that may establish a connection to a distant communication device, for example a wireless connection, as schematically shown by antenna 22. In addition or alternatively, this vehicle-external connection can be used to transfer billing information from or to central unit 23 and/or from or to control device 25. Furthermore, this vehicle-external connection may be used to transfer rules how control device 25 should control the output of information.

Control device 25, which is connected to central unit 23, receives (as indicated by a double-line arrow) information about the passenger occupancy within the vehicle or within the compartment and decides if, and if yes, which pre-fabricated information is to be output by the output units 27, 29, 31, 33 and/or 34. Control device 25 controls central unit 23 in a corresponding manner so that the information is output by all or some of the output units 27, 29, 31, 33, 34.

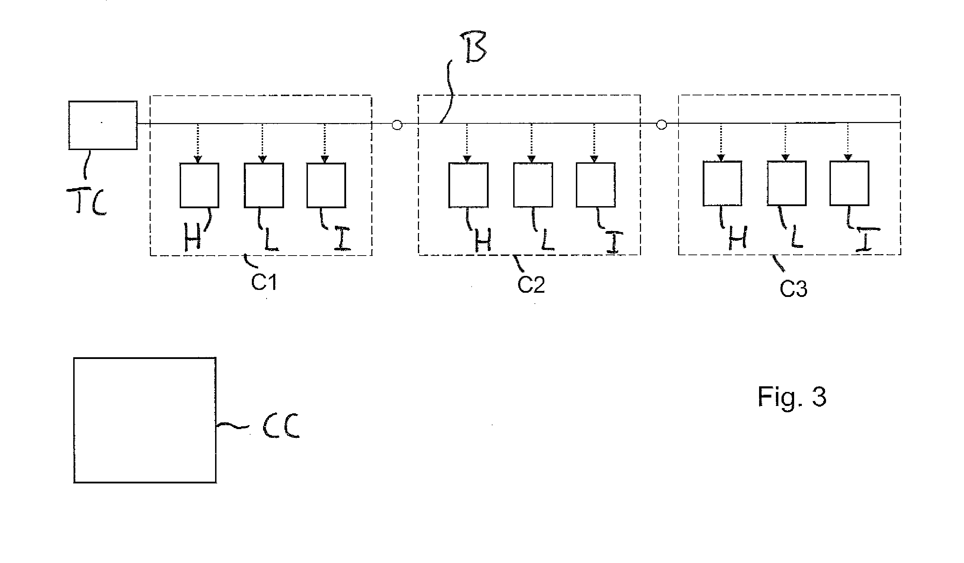

The control device 25 may receive the information about the passenger occupancy from a passenger occupancy determining device 39 (e.g. a passenger number determining device, such as the system CC of Fig. 3), and/or from an interface within the vehicle and/or from a vehicle-external source, for example via the communication device 21.

Not limited to this example of a data distribution system, the control device preferably receives information about the passenger occupancy continuously or repeatedly and also continuously or repeatedly decides if and/or which pre-fabricated information is to be output. In addition, control device controls the data distribution system repeatedly or continuously, depending on the passenger occupancy. However, sequences of information the output of which have been started are preferably not interrupted, but are output until the end of the sequence is reached. For example, an advertisement having a length of 30 seconds is not interrupted if passengers leave the compartment or vehicle during the output.

Fig. 3 schematically shows a vehicle having three compartments C1, C2, C3, for example the vehicle shown in Fig. 1. Output devices H, L, I in the different compartments C1, C2, C3 are connected to a data bus B for receiving information to be displayed from central device TC of a data distribution system. This central device TC may, for example, include the central unit 23 and the control device 25 of the system shown in Fig. 2.

In addition, Fig. 3 shows a passenger number counting system CC which counts the passenger numbers in the compartments C1, C2, C3 separately of each other. For example in the situation shown in Fig. 1, the passenger number counting system determines that there are eight passengers in compartment C1, and eight passengers in compartment C2, and it counts that there are only two passengers in compartment C3. There may be a threshold value of the passenger number which is preset to 7. The control device of the data distribution system would compare the actual passenger number counted by the passenger number counting system CC with the threshold value and would control the output of information to passengers within the compartments C1, C2, C3 in such a manner that information (in particular advertisements) is output to passengers in compartment C1 and C2, but not in compartment C3, since the passenger number in compartment C3 is too small.

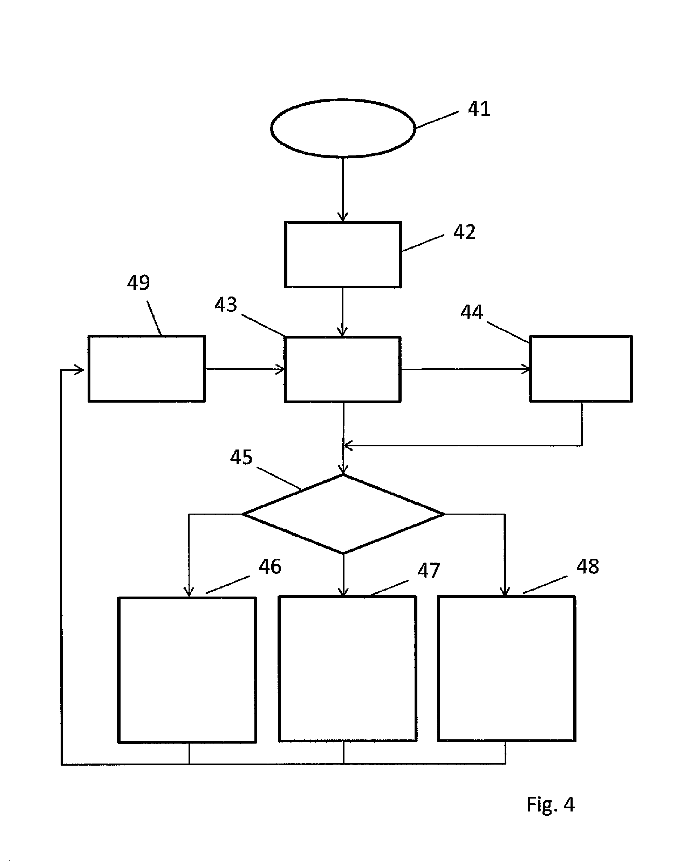

Fig. 4 shows a flow chart illustrating a method of outputting information to passengers within a vehicle, in particular within a railway train. The method is started (oval 41: "start up") and in the next step 42 ("trip selection") information about the trip of the vehicle is obtained, in particular loaded from a data storage or received from a vehicle-external system. However, step 42 is optional. Step 43 may be the first step after start of the procedure, If executed, step 42 may have the effect that the output of travel information (in particular information about the trip) to passengers has priority compared to the output of other information and/or that the output of information to passengers depends on the occupancy and also on the information about the trip.

In the following step 43 ("trip running"), optional procedures may be performed during the trip, for example checking the available information which might be output to passengers within the vehicle and/or evaluating control parameters which define conditions for the output of associated information.

If step 43 is performed immediately after step 42, step 43 triggers the execution of step 44 ("passenger counting"). At a later stage of the trip, step 43 may be performed again and, in this case, the triggering of step 44 may depend on the question whether a predetermined condition is fulfilled. Such a predetermined condition may be that the vehicle has stopped so that passengers may have entered or may have left the vehicle.

In step 44, the passenger occupancy in at least one compartment of the vehicle is determined or corresponding information about the passenger occupancy is received.

In step 45 ("publicity?"), which follows on step 43 and follows on step 44, information about the passenger occupancy and, optionally, additional information is evaluated in order to decide whether information is output to passengers. In the example shown in Fig. 4, there are three different cases. In the first case, the passenger occupancy is low (for example, the passenger number in a specific compartment is smaller than a predetermined threshold value). In this case, step 48 ("low passenger occupancy, no publicity") follows on the decision made in step 45 and no information is output to passengers.

In case of the passenger occupancy being in a medium range (for example, the passenger number is greater than or equal to the predetermined threshold value, but is smaller than a second predetermined threshold value which is greater than the first predetermined threshold value), step 47 ("medium passenger occupancy, standard publicity") follows on the decision made in step 45 and a first way of outputting information to passengers is performed. This way of outputting may be referred to as the standard way of outputting information to passenger. For example, advertisements may be output from time to time, in particular at regular time intervals or in time intervals amounting to a predetermined fraction of an hour.

In the third case, the passenger occupancy is high (for example, the passenger number is greater than or equal to the second predetermined threshold value). In this case, step 46 ("high passenger occupancy, specific publicity") is performed after the decision in step 45 has been made. In step 46, information to passengers is output in a different manner compared to step 47. In particular, the amount of information which is output to passengers is greater than in step 47. For example, the repetition frequency for outputting advertisements to passengers or the fraction of time during which advertisements are output to passengers is greater in step 47.

Step 49 ("log (number of passengers, trip information, publicity information, time)") follows on any of steps 46 - 48. In step 49, the way of outputting information to passengers which is performed in steps 46 or 47 is documented, for example by writing corresponding data into a log-file of a computer system. For example, it is documented that a specific sequence of information (such as a specific advertisement) was presented to passengers by outputting the information. Of course, step 49 can be performed during any of steps 46 - 48.

When step 49 is finished, step 43 is executed again. According to an alternative embodiment, a predefined event (such as the vehicle reaches a station where passengers may enter or leave the vehicle) may trigger termination of any of steps 46 - 48 so that step 49 is either terminated or first started and then terminated. As a result, step 43 is performed and, if a corresponding condition is fulfilled, step 43 triggers step 44 in order to update information about the passenger occupancy.

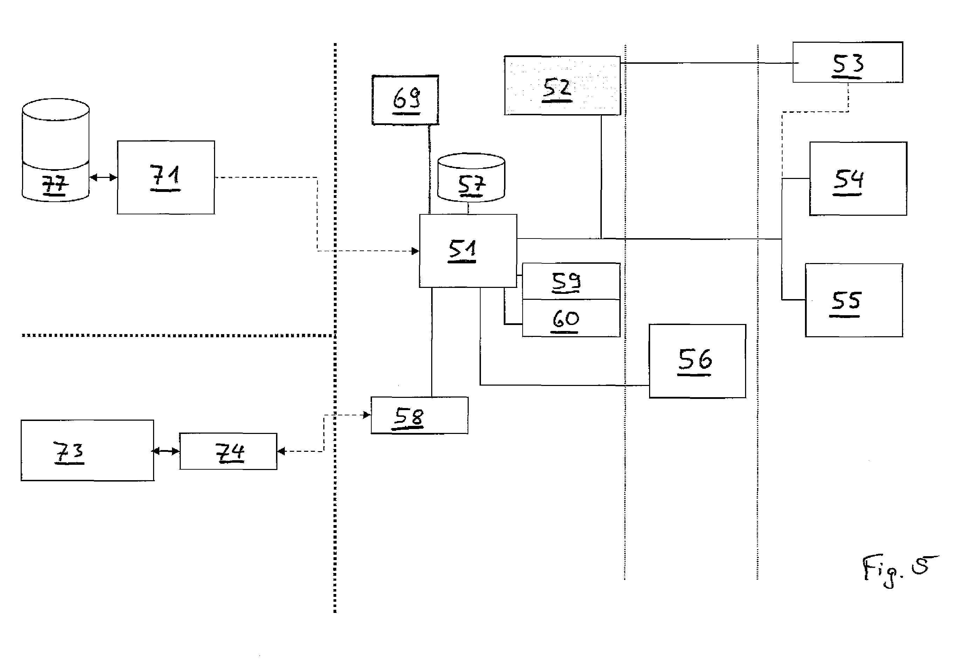

Fig. 5 shows components of a passenger information and entertainment system (PIES) on-board a vehicle. Generally, as mentioned before, the PIES can comprise the data distribution system mentioned before. In addition, the PIES, in particular a PIES controller 51 may be connected to a passenger number determining device 69 (or to another type of passenger occupancy determining device) and/or may comprise an interface for receiving information about the passenger occupancy (for example from the wayside components, such as from ground tools 71).

The specific embodiment of a PIES as shown in Fig. 5 is constructed as follows: A central component of the PIES is the PIES controller 51. It has interfaces to output device 53, 54, 55, 56 for outputting data and/or content of data, in particular video and audio data or content thereof. For example, block 53 represents one or a plurality of TFT (thin film transistor) display(s), block 54 represents one or a plurality of LED (light emitting diode) display(s), block 55 represents one or more than one audio unit(s) and block 56 represents at least one human machine interface (HMI).

The PIES shown in Fig. 5 is a multi-component system which is used to pass information to the passengers, before, during and after a trip. The PIES controller 51 is adapted to control the system, in particular using computer software running on at least one computer. The controller 51 manages the operation of the output devices 53, 54, 55, 56. The at least one HMI 56 is used on-board by the vehicle staff, in particular by the driver, to control the operation of the PIES controller 51. The other output devices 53, 54, 55 output visual information and audio information to passengers on-board the vehicle. For example, audio output may include announcement in form of pre-recorded messages.

In addition, personal devices, in particular the personal devices mentioned above, can be used as output devices. These personal devices may be connected using cables and/or wireless connections to the PIES controller 51.

On the wayside, ground tools 71 are adapted to add, remove and/or modify a database of the PIES. This database may be on-board and/or may be located on the wayside. In Fig. 5, reference numeral 57 represents an on-board database. Reference numeral 77 represents a wayside database for the PI ES. The ground tools 71 allow, for example, to upload information from the database 77 while the vehicle is not in service.

An additional communication API (application program interface) allows to update the on-board PIES information database 57, preferably in real time, and in particular during service of the vehicle, for example during a trip. The communication API 73 is connected to the PIES controller 51 via a wayside communication gateway 74 and via a mobile communication gateway 58 on-board the vehicle.

As illustrated in the Fig. 5, the PIES may comprise an infotainment content server 52, which is connected to the PIES controller 51 on one side and is connected to at least one output device 53 on the other side. This enables the PIES controller 51 to control the infotainment content server 52 to output certain PIES announcements to passengers, wherein, for example, these announcements are produced and/or recovered by the infotainment content server 52. However, it is also possible that the PIES controller 51 transfers infotainment content data to the infotainment content server 52 and that the server 52 either outputs the data or their content or modifies the infotainment data for output.

For example the data which are to be output to passengers depending on the passenger occupancy or on the equivalent information, can be retrieved from the PIES database 57, can be received from the wayside PIES database 77, can be received during operation of the vehicle from the communication API 73 and/or can be modified or generated during operation of the vehicle, for example by the infotainment content server 52.

Fig. 5 also shows schematically two blocks 59 and 60 which are connected to the PIES controller 51. Block 59 represents information about the operational status of the vehicle. Block 60 represents information about the location of the vehicle (for example 10 km away from a specific train station on a specific route). Therefore, the PIES controller can control the output of data or data content to passengers not only depending on the passenger number or on equivalent information, but also depending on the operational status of the vehicle and/or on the location of the vehicle.

## Claims

1. A track-bound vehicle, in particular a rail vehicle, having at least one passenger compartment (C1, C2, C3), wherein:
- the vehicle comprises a data distribution system (23, 27-34) comprising at least one output device (27-34) which is adapted to output the data and/or content of the data, which is distributed by the data distribution system (23, 27-34), to passengers within the compartment, **characterized in that**
- the vehicle comprises at least one passenger occupancy determining device (CC) which is adapted to determine the passenger occupancy of the compartment (C1, C2, C3) and/or comprises an interface for receiving information about the passenger occupancy,
- the data distribution system (23, 27-34) comprises at least one control device for controlling the at least one output device (27-34),
- the control device (25) is connected to the passenger occupancy determining device (CC) and/or to the interface (22) for receiving the passenger occupancy information and
- the control device (25) is adapted to control the output device (27-34) depending on the passenger occupancy information.

2. The vehicle of claim 1, wherein the rail vehicle comprises a plurality of passenger compartments (C1, C2, C3) and wherein:
- the data distribution system (TC, H, L, I) comprises at least one output device (H, L, I) for each of the plurality of passenger compartments, the output device being adapted to output the data and/or the content of the data to passengers within the compartment (C1, C2, C3),
- the passenger occupancy determining device (CC) is adapted to determine the passenger occupancy (C1, C2, C3) separately for at least some of the compartments (C1, C2, C3) and/or comprises an interface for receiving information about the passenger occupancy for at least some of the compartments (C1, C2, C3),
- the data distribution system (TC, H, L, I) comprises a control device (TC) or a plurality of control devices for controlling the output devices (H, L, 1),
- each control device (TC) is connected to the passenger occupancy determining device (CC) and/or to the interface for receiving the passenger occupancy within the compartments (C1, C2, C3) and
- each control device (TC) is adapted to control at least one of the output devices (H, L, I) depending on the passenger occupancy in the compartment (C1, C2, C3) for which the output device (H, L, I) is adapted to output information depending on the passenger occupancy information.

3. The vehicle of claim 1 or 2, wherein the data distribution system (TC, H, L, I) comprises at least one control parameter which defines a condition for the output of information to passengers, wherein the at least one control parameter is assigned to respective information to be output, wherein the control device is adapted to control the output device (27-34) depending on the condition defined by the at least one control parameter, so that the information to be output is only output if the condition is fulfilled.

4. The vehicle of any of the preceding claims, wherein the passenger occupancy determining device comprises at least one passenger number determining device.

5. The vehicle of any of the preceding claims, wherein the passenger occupancy determining device comprises at least one vehicle load determining device.

6. A method of operating a track-bound vehicle, in particular a rail vehicle, having at least one passenger compartments (C1, C2, C3), wherein:
- information from a data distribution system (23, 27-34) is output to passengers within the compartment (C1, C2, C3),
- the passenger occupancy of the compartment (C1, C2, C3) is automatically determined and/or information about the passenger occupancy of the compartment (C1, C2, C3) is received by the data distribution system (23, 27-34) via an interface,
- the output of the information to passengers within the compartment (C1, C2, C3) is automatically controlled depending on the passenger occupancy.

7. The method of claim 6, wherein the rail vehicle comprises a plurality of passenger compartments (C1, C2, C3) and wherein the data distribution system (TC, H, L, I) outputs information to passengers in at least two compartments (C1, C2, C3) depending on the passenger occupancy of the respective compartment (C1, C2, C3) where the information is to be output.

8. The method of claim 6 or 7, wherein a condition for the output of information to passengers is defined by a control parameter which is accessible by the data distribution system (TC, H, L, I), wherein the at least one control parameter is assigned to respective information to be output and wherein the output of the information to be output is controlled depending on the condition defined by the at least one control parameter, so that the information to be output is only output if the condition is fulfilled.
